# EUROPÄISCHE PATENTANMELDUNG

(11) **EP 1 101 913 A2**
(43) Veröffentlichungstag der Anmeldung: **23.05.2001**
(21) Anmeldenummer: 00123613.2
(22) Anmeldetag: 28.10.2000
(51) Int. Cl.: F01N 11/00

(54) **Verfahren zur Überprüfung der katalytischen Aktivität eines Katalysators**

(30) Priorität: 19.11.1999 DE 19955947
(71) Anmelder: Heraeus Electro-Nite International N.V., 3530 Houthalen (BE)
(72) Erfinder: Baerts, Christiaan, 3580 Beringen-Paal (BE)
(74) Vertreter: Kühn, Hans-Christian

(57) **Zusammenfassung**

Die Erfindung betrifft zwei Verfahren zur Überprüfung der katalytischen Aktivität eines Katalysators, der in der Abgasführung eines Kraftfahrzeuges angeordnet ist. Es stellt sich das Problem, ein neues Verfahren zur Überprüfung der katalytischen Aktivität eines Katalysators, der in der Abgasführung eines Kraftfahrzeuges angeordnet ist, bereitzustellen. Das Problem wird für ein Verfahren dadurch gelöst, daß ausgehend von einem Kaltstart von dem Temperaturfühler ein Temperaturverlauf erfasst wird und dabei ein Temperaturplateau bestimmt wird und daß die Länge des Temperaturplateaus mit der Länge eines an einem neuen Katalysator vorab bestimmten Temperaturplateaus verglichen wird und daß eine Verkürzung der Länge des gemessenen Temperaturplateaus gegenüber der Länge des vorab bestimmten Temperaturplateaus als eine Alterung des Katalysators ausgewertet wird und daß der Katalysator als defekt beurteilt wird, wenn die Verkürzung einen festgesetzten Grenzwert überschreitet.

## Beschreibung

Die Erfindung betrifft ein Verfahren zur Überprüfung der katalytischen Aktivität eines Katalysators, der in der Abgasführung eines Kraftfahrzeuges angeordnet ist, mit einem Temperaturfühler, der im, am oder hinter dem Katalysator angeordnet ist beziehungsweise mit einem ersten Temperaturfühler, der vor dem Katalysator angeordnet ist und mit einem zweiten Temperaturfühler, der im, am oder hinter dem Katalysator angeordnet ist.

Verfahren zur Überprüfung der katalytischen Aktivität eines Katalysators in einem Kraftfahrzeug mit Hilfe von Temperaturfühlern sind bekannt.
So beschreibt die OS 4027 207 A1 ein solches Verfahren mit mindestens zwei, dem Katalysator zugeordneten, Temperaturmeßfühlern. Aus den Signalen der Temperaturmeßfühler wird eine Temperaturmeßgröße gebildet, die entweder unter Bildung eines Mittelwertes und unter Einbeziehung einer Vielzahl von Betriebszuständen oder unter Einbeziehung weiterer Meßgrößen auf eine vom jeweiligen Betriebszustand unabhängige Aussage reduziert und mit einem vorgegebenen Grenzwert verglichen wird. Ist die Temperaturmeßgröße kleiner als der Grenzwert, wird der Katalysator als defekt gemeldet.

Auch die WO 93/20340 beschreibt ein Verfahren zur Beurteilung der Funktionsfähigkeit eines Katalysators, der im Abgaskanal eines Verbrennungsmotors betrieben wird. Der Verbrennungsmotor wird dabei ausgehend von einem Zustand betrieben, bei dem die Katalysatortemperatur unter der Konvertierungsbeginn-Temperatur eines neuen Katalysators liegt und bestimmt, bei welcher Temperatur der Katalysator zu konvertieren beginnt. Die festgestellt Konvertierungsbeginn-Temperatur wird mit einer Vergleichstemperatur verglichen, die über der Konvertierungsbeginn-Temperatur eines neuen Katalysators liegt und der Katalysator als funktionsfähig beurteilt, wenn die festgestellt Konvertierungsbeginn-Temperatur unter der Vergleichstemperatur liegt. In einem zweiten Verfahren wird die Zeitspanne bestimmt, die Katalysator benötigt, um die Vergleichstemperatur zu erreichen und diese Zeitspanne mit einer Vergleichszeitspanne verglichen. Ist die gemessenen Zeitspanne kürzer als die Vergleichszeitspanne, wird der Katalysator wiederum als funktionsfähig beurteilt.

Es stellt sich nun das Problem, ein weiteres Verfahren zur Überprüfung der katalytischen Aktivität eines Katalysators, der in der Abgasführung eines Kraftfahrzeuges angeordnet ist, bereitzustellen.

Das Problem wird für ein erstes Verfahren dadurch gelöst, daß ausgehend von einem Kaltstart von dem Temperaturfühler ein Temperaturverlauf erfasst wird und dabei ein Temperaturplateau bestimmt wird und daß die Länge des Temperaturplateaus mit der Länge eines an einem neuen Katalysator vorab bestimmten Temperaturplateaus verglichen wird und daß eine Verkürzung der Länge des gemessenen Temperaturplateaus gegenüber der Länge des vorab bestimmten Temperaturplateaus als eine Alterung des Katalysators ausgewertet wird und daß der Katalysator als defekt beurteilt wird, wenn die Verkürzung einen festgesetzten Grenzwert überschreitet.

Das Problem wird für ein zweites Verfahren dadurch gelöst, daß ausgehend von einem Kaltstart jeweils ein Temperaturverlauf mit dem ersten Temperaturfühler und ein Temperaturverlauf mit dem zweiten Temperaturfühler erfasst wird und daß dabei vom zweiten Temperaturfühler ein Temperaturplateau bestimmt wird und daß zu Beginn und zu Ende des Temperaturplateaus jeweils eine Differenz zwischen der Temperatur am ersten Temperaturfühler und der Temperatur am zweiten Temperaturfühler gebildet wird und daß die beiden Differenzwerte miteinander verrechnet werden und der verrechnete Wert mit einem an einem neuen Katalysator vorab bestimmten Vergleichswert verglichen wird und daß Abweichungen vom Vergleichswert als eine Alterung des Katalysators ausgewertet werden und daß der Katalysator als defekt beurteilt wird, wenn die Abweichung einen festgesetzten Grenzwert überschreitet.

Unter einem Kaltstart wird dabei jeder Zustand verstanden, bei welchem sich die Abgasführung des Kraftfahrzeuges im Bereich der Umgebungstemperatur bewegt und ca. +50°C nicht überschreitet.

Beide Verfahren verwenden die Erkenntnis, daß ein Katalysator zur Abgasreinigung oder Stickoxidminderung nach dem Kaltstart einen charakteristischen Temperaturanstieg aufweist, der von einem Plateau, bei dem sich die Temperatur kurzzeitig nicht ändert, begleitet ist. Das Plateau kennzeichnet einen bestimmten, sich in engen Grenzen immer wieder über einen einen mehr oder weniger merklich langen Zeitraum in der gleichen Höhe einstellenden Temperaturwert, der abhängig vom Taupunkt des durch den Katalysator strömenden Abgases ist. Der Temperaturwert des Plateaus ist demzufolge eine nahezu konstante Größe. Anders verhält es sich jedoch mit der Länge des Plateaus und damit dem Temperaturunterschied zwischen Abgas und Plateau zu Beginn und vor allem zu Ende des Plateaus. Es wurde festgestellt, daß die Länge des Plateaus von der Menge an Wasser abhängt, die auf der inneren, spezifischen Oberfläche des Katalysator nach einem Kaltstart verdampft werden muß. Die spezifische Oberfläche selbst stellt ein Maß für die katalytische Aktivität des Katalysators dar. Die Wassermenge, die verdampft werden muß, ist aber proportional dieser spezifischen Oberfläche. Damit stellt die Länge des Plateaus ein Maß für die katalytische Aktivität des Katalysators dar.

Die Ermittlung des für Vergleichzwecke benötigten Plateaus eines neuen Katalysators muß je nach Katalysatortyp und Anordnung des Temperatursensors in der Abgasführung getrennt erfolgen und kann mit Hilfe einer separaten Testanordnung oder auch bei den ersten Kaltstarts eines neuen Kraftfahrzeuges festgelegt werden. Die Ermittlung ist um so einfacher, je höher die zu erwärmende Masse des Katalysators und desto höher die innere spezifische Oberfläche des Katalysators vor dem Temperatursensor im, am oder hinter dem Katalysator ist, da sich daraus die Vergleichs-Länge des Plateaus ergibt. Die ermittelte Vergleichs-Länge des Plateaus, die meßtechnisch einer Zeitspanne entspricht, kann in einer Software im Kraftfahrzeug fest hinterlegt werden, die auch in der Lage sein muß, die Zeitspanne festzustellen, wann sich der ansteigende Temperaturverlauf des Katalysators in einem Plateau befindet.

Nach dem ersten Verfahren kann also die aktuell gemessene Länge des Plateaus beziehungsweise die Zeitspanne mit dem hinterlegten Wert für die Vergleichs-Länge des Plateaus beziehungsweise der Vergleichs-Zeitspanne verglichen werden und bei Überschreitung eines vorab festgelegten Grenzwertes der Katalysator als defekt beurteilt werden.

Nachfolgende Figuren sollen die erfindungsgemäßen Verfahren beispielhaft näher erläutern. So zeigt:
- Fig. 1: Auswertung der Plateau-Daten nach Verfahren 1
- Fig.2: Auswertung der Plateau-Daten nach Verfahren 2

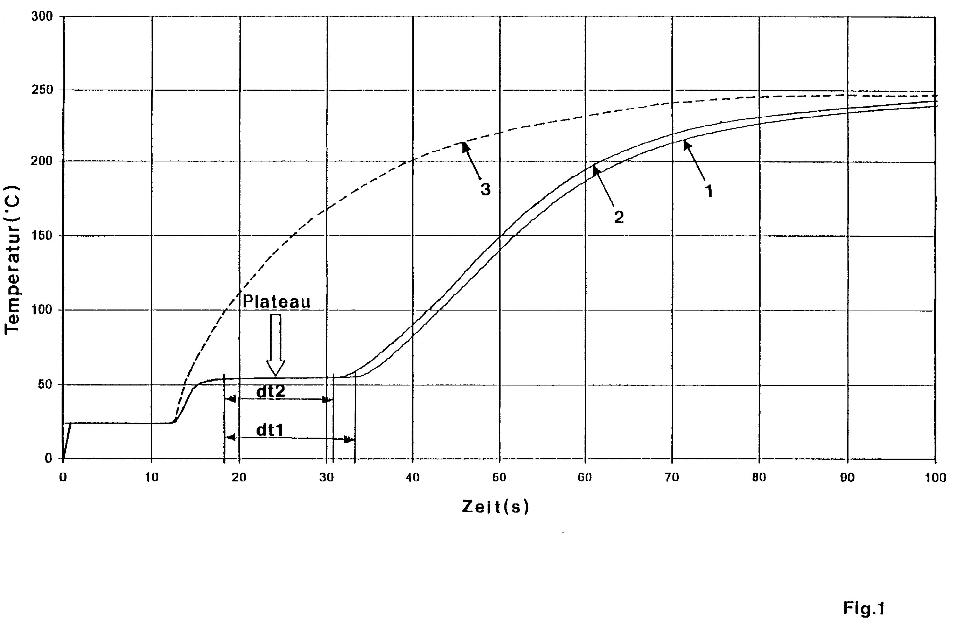

Fig. 1 zeigt den mit einem Temperaturfühler hinter einem neuen Katalysator gemessenen Temperaturverlauf Kurve 1 und den hinter einem gealterten Katalysators gemessenen Temperaturverlauf Kurve 2. Die Kurve 3 zeigt den tatsächlichen Verlauf der Abgastemperatur, die hier jedoch nicht gemessen werden muß und nur zur besseren Übersicht dient. Es zeigt sich für Kurve 1 ein Plateau mit der Länge - beziehungsweise Zeitspanne - dt1 und für Kurve 2 ein kürzeres Plateau der Länge dt2. Beispielsweise kann eine Differenz aus dt1 und dt2 nun mit einem vorab festzulegenden Grenzwert verglichen werden und beurteilt werden, ob der Katalysator noch funktionsfähig ist oder nicht. Diese Beurteilung kann anhand einer Elektronikeinheit erfolgen, in welcher die für den verwendeten Katalysatortyp ermittelten Werte über die katalytische Aktivität im Bezug zur Länge des Plateaus hinterlegt sein müssen.

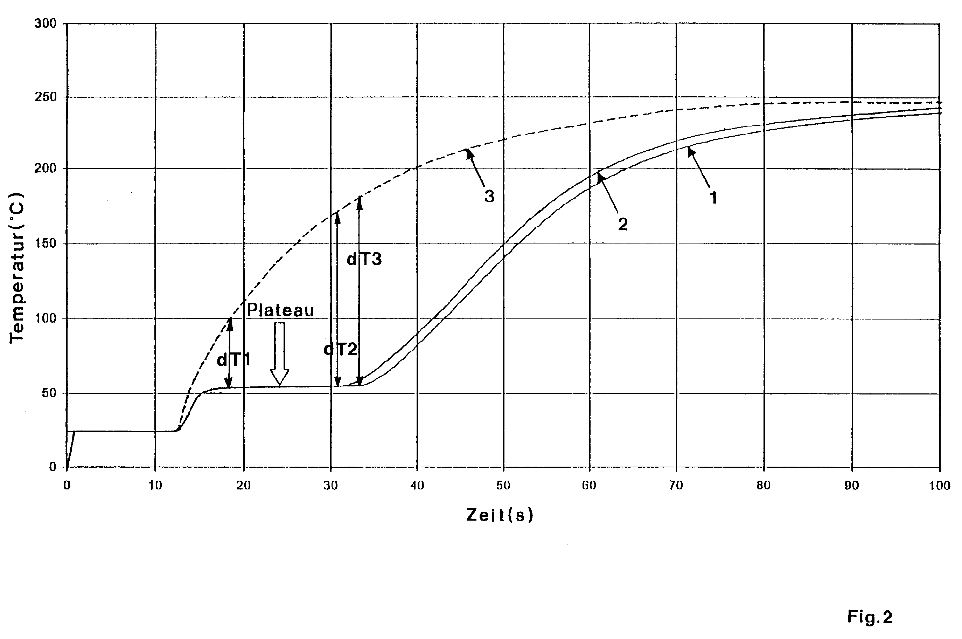

Fig. 2 zeigt den mit einem Temperaturfühler hinter einem neuen Katalysator gemessenen Temperaturverlauf Kurve 1 und den hinter einem gealterten Katalysators gemessenen Temperaturverlauf Kurve 2. Die Kurve 3 zeigt den tatsächlichen Verlauf der Abgastemperatur, der hier vor dem Katalysator gemessen wurde. Es zeigt sich für Kurve 1 ein Plateau bestimmter Länge und für Kurve 2 im Vergleich ein Plateau von kürzerer Länge. Eine Temperatur-Differenz A aus dT1 und dT2 sowie eine Temperatur-Differenz B aus dT1 und dT3 kann nun ermittelt werden und A mit B, beispielsweise durch Differenzbildung, verrechnet werden. Im vorliegenden Beispiel befindet sich dT1, also der Plateau-Beginn, für beide Kurven an der gleichen Stelle. Somit könnte in diesem Fall auch einfacher mit der Differenz aus dT2 und dT3 gerechnet werden. Der verrechnete Wert wird nun mit einem vorab festzulegenden Grenzwert verglichen und beurteilt, ob der Katalysator noch funktionsfähig ist oder nicht. Diese Beurteilung kann anhand einer Elektronikeinheit erfolgen, in welcher die für den verwendeten Katalysatortyp ermittelten Werte über die katalytische Aktivität im Bezug zum verrechneten Wert hinterlegt sein müssen.

## Patentansprüche

1. Verfahren zur Überprüfung der katalytischen Aktivität eines Katalysators, der in der Abgasführung eines Kraftfahrzeuges angeordnet ist, mit einem Temperaturfühler, der im, am oder hinter dem Katalysator angeordnet ist, dadurch gekennzeichnet, daß ausgehend von einem Kaltstart von dem Temperaturfühler ein Temperaturverlauf erfasst wird und dabei ein Temperaturplateau bestimmt wird und daß die Länge des Temperaturplateaus mit der Länge eines an einem neuen Katalysator vorab bestimmten Temperaturplateaus verglichen wird und daß eine Verkürzung der Länge des gemessenen Temperaturplateaus gegenüber der Länge des vorab bestimmten Temperaturplateaus als eine Alterung des Katalysators ausgewertet wird und daß der Katalysator als defekt beurteilt wird, wenn die Verkürzung einen festgesetzten Grenzwert überschreitet.

2. Verfahren zur Überprüfung der katalytischen Aktivität eines Katalysators, der in der Abgasführung eines Kraftfahrzeuges angeordnet ist, mit einem ersten Temperaturfühler, der vor dem Katalysator angeordnet ist und mit einem zweiten Temperaturfühler, der im, am oder hinter dem Katalysator angeordnet ist, dadurch gekennzeichnet, daß ausgehend von einem Kaltstart jeweils ein Temperaturverlauf mit dem ersten Temperaturfühler und ein Temperaturverlauf mit dem zweiten Temperaturfühler erfasst wird und daß dabei vom zweiten Temperaturfühler ein Temperaturplateau bestimmt wird und daß zu Beginn und zu Ende des Temperaturplateaus jeweils eine Differenz zwischen der Temperatur am ersten Temperaturfühler und der Temperatur am zweiten Temperaturfühler gebildet wird und daß die beiden Differenzwerte miteinander verrechnet werden und der verrechnete Wert mit einem an einem neuen Katalysator vorab bestimmten Vergleichswert verglichen wird und daß Abweichungen vom Vergleichswert als eine Alterung des Katalysators ausgewertet werden und daß der Katalysator als defekt beurteilt wird, wenn die Abweichung einen festgesetzten Grenzwert überschreitet.
